# EUROPÄISCHE PATENTANMELDUNG

(11) **EP 3 124 627 A1**
(43) Veröffentlichungstag der Anmeldung: **01.02.2017**
(21) Anmeldenummer: 16178181.0
(22) Anmeldetag: 06.07.2016
(51) Int. Cl.: C21D 5/00, C21D 9/38, C22C 37/04, F16C 9/02, F16C 33/00

(54) **ENTFERNEN VON DECKELN IN SPHÄROLITHEN**

(30) Priorität: 30.07.2015 CH 11072015
(71) Anmelder: Georg Fischer Automotive AG, 8201 Schaffhausen (CH)
(72) Erfinder: Menk, Werner, 8203 Schaffhausen (CH)
(74) Vertreter: Fenner, Seraina

(57) **Zusammenfassung**

Verfahren zur Oberflächenbehandlung von hoch beanspruchten gleitenden Lagerflächen von Gussteilen aus Gusseisen mit Kugelgraphit, wobei die zu bearbeitenden Oberflächen mittels Ultraschall bearbeitet werden.

## Beschreibung

Die Erfindung betrifft ein Verfahren zur Oberflächenbehandlung von hoch beanspruchten gleitenden Lagerflächen von Gussteilen mit Kugelgraphit. Ein häufiges Anwendungsgebiet sind Kurbelwellenlager wobei dieses Verfahren auch für andere Bauteile eingesetzt werden kann.

Schon lange werden bspw. Kurbelwellen aus Kugelgraphit enthaltendem Gusseisen hergestellt.

Aus früheren Veröffentlichungen sind Lösungen für die Bearbeitung von Oberflächen von Guss-Kurbelwellen bekannt, nämlich: GLYCO-METALL-WERKE Ingenieurbericht Nr. 2/1964 und H.P. Staudinger; H. Dreher, Lagerverhalten von Gusskurbelwelllen, Georg Fischer AG 1988.

Beim Schleifen bzw. bei der Endbehandlung (Finishing) der Lagerflächen, z.B. von Kurbelwellen aus Gusseisen mit Kugelgraphit werden zwangsläufig Sphärolithen freigelegt.

Dadurch entstehen sogenannte "Deckel" über angeschnittene Sphärolithen. Unter dem inzwischen sprachgebräuchlichen Begriff "Deckel" oder "Blechdeckel" versteht man die beim Anschnitt von Sphärolithen an der Oberfläche verbleibenden dünnen Reste der metallischen Grundmasse. Durch das Vorhandensein dieser Deckel kann es zu negativen Einflüssen auf das Verschleissverhalten der gleitenden Gussteile kommen. Diese Deckel können im Betrieb abbrechen und im schlimmsten Fall zur Zerstörung von Lagerschalen und somit zu Motorschäden führen.

Die bisherigen Verfahren sind sehr aufwendig. Bei der Verwendung von bleihaltigen Lagerschalen ist ein Einsatz von Gusseisen mit Kugelgraphit z.B. für Kurbelwellen nur eingeschränkt, mit bleifreien Lagerschalen gar nicht möglich.

Somit ist es die Aufgabe der Erfindung ein Verfahren zu beschreiben, welches in einfacher Weise das Entfernen von Deckeln in Sphärolithen ermöglicht. Dies gilt insbesondere auch für bleifreie Lagerschalen, zumal die europäischen Richtlinien zukünftig die Verwendung von bleifreien Lagerschalen vorschreiben.

Diese Aufgabe wird erfindungsgemäss dadurch gelöst, dass die zu bearbeitenden Oberflächen mittels Ultraschall bearbeitet werden. Mittels des Ultraschalls werden die Sphärolithendeckel abgetragen bzw. entfernt, wodurch ein Abbrechen der Deckel im Betrieb des Gussteils vermieden werden kann.

Der Ultraschall zur Entfernung der Sphärolithendeckel wird vorzugsweise durch Piezotechnik erzeugt. Dies ermöglicht die Herstellung einer kompakten Vorrichtung für die Erzeugung des Ultraschalls, jedoch sind auch andere Techniken zur Ultraschallerzeugung denkbar.

Es hat sich gezeigt, dass es von Vorteil ist, wenn die zu bearbeitenden Oberflächen während der Ultraschallbearbeitung gekühlt werden, die Kühlung kann durch Luft erfolgen oder durch Wasser, was sich als besonders bevorzugte Ausführung herausgestellt hat.

Durch den Einsatz von Wasser als Kühlmittel und dem angewandten Ultraschall wird eine Kavitation erzeugt. Das heisst, die entstehenden Wasserblasen zerplatzen an der zu bearbeitenden Oberfläche und setzen dadurch Energie frei, die die Sphärolithendeckel zerstört und entfernt. Zudem wird auch der angeschnittene Graphitpartikel mitentfernt.
Durch diesen Vorgang entstehen offene Taschen in der bearbeiteten Oberfläche des Gussteils in denen Schmieröl liegen bleiben kann, das im Betrieb zur Erzeugung der Notlaufeigenschaften dient. Des Weiteren hat sich auch als vorteilhaft gezeigt, dass die entstandenen offenen Taschen mit Gleitstoff gefüllt werden können um das Gleitverhalten der Gussteile gezielt zu beeinflussen bzw. zu verbessern.

In den folgenden Figuren sind die Ausgangssituation und die Wirkung des Verfahrens dargestellt. Es zeigen:
- Figur 1: eine Eisenmatrix mit Sphärolithen
- Figur 2: eine Originaloberfläche und eine behandelte Oberfläche
- Figur 3: eine Vergrösserung einer Originaloberfläche

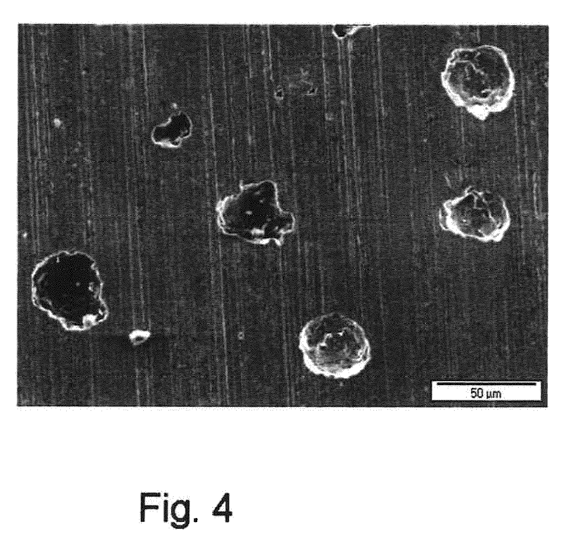

- Figur 4: eine Vergrösserung einer behandelten Oberfläche

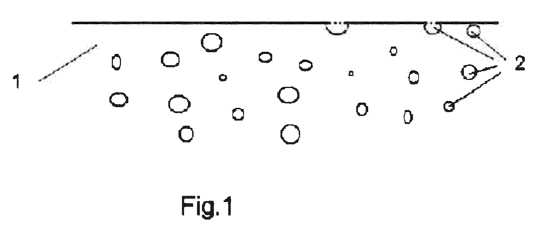

Die in Figur 1 schematisch dargestellte Skizze zeigt eine Eisenmatrix 1 mit Sphärolithen 2. An der Oberfläche sind die zum Teil abgeschliffenen Sphärolithen zu sehen.

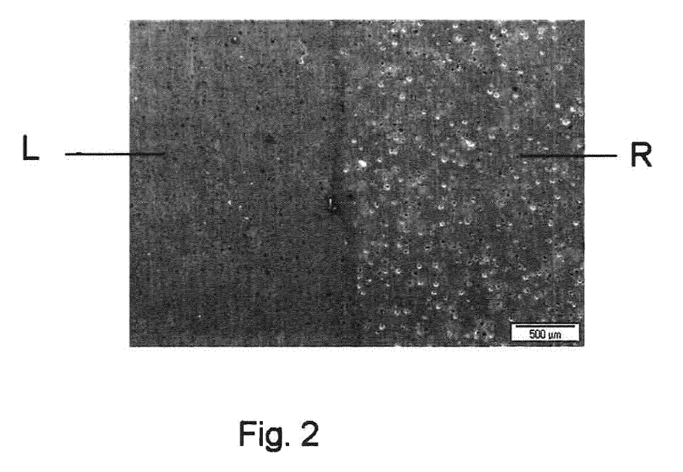

In der Figur 2 ist die Oberfläche eines Kurbelwellenbereichs gezeigt. Auf der linken Hälfte L der Abbildung 2 ist die Originaloberfläche mit den unerwünschten Deckeln zu sehen. Die rechte Hälfte R zeigt die mit Ultraschall behandelte Oberfläche.

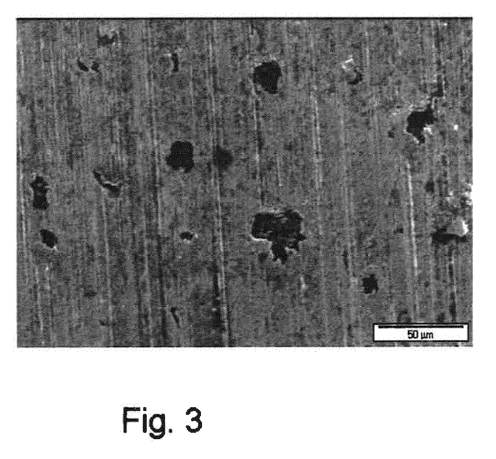

Die Verhältnisse sind vergrössert in den Figuren 3 (Originaloberfläche) und 4 (behandelte Oberfläche) zu sehen.

Bei der behandelten Oberfläche erkennt man deutlich die entfernten Deckel. Die einzelnen Sphärolithen sehen nahezu kreisförmig aus.

Zusammenfassend ist festzustellen, dass die nach dem erfindungsgemässen Verfahren behandelten Oberflächen der Lagerflächen der Gussteile keine Deckel mehr aufweisen, was deutlich einen Gleitverschleiss vermindert.

## Patentansprüche

1. Verfahren zur Oberflächenbehandlung von hoch beanspruchten gleitenden Lagerflächen von Gussteilen aus Gusseisen mit Kugelgraphit, **dadurch gekennzeichnet, dass** die zu bearbeitenden Oberflächen mittels Ultraschall bearbeitet werden.

2. Verfahren zur Oberflächenbehandlung von hoch beanspruchten gleitenden Lagerflächen von Gussteilen aus Gusseisen mit Kugelgraphit nach Anspruch 1, **dadurch gekennzeichnet, dass** der Ultraschall mittels Piezotechnik erzeugt wird.

3. Verfahren zur Oberflächenbehandlung von hoch beanspruchten gleitenden Lagerflächen von Gussteilen aus Gusseisen mit Kugelgraphit nach einem der Ansprüche 1 oder 2, **dadurch gekennzeichnet, dass** die zu bearbeitenden Oberflächen während der Ultraschallbearbeitung gekühlt werden.

4. Verfahren zur Oberflächenbehandlung von hoch beanspruchten gleitenden Lagerflächen von Gussteilen aus Gusseisen mit Kugelgraphit nach einem der Ansprüche 1 bis 3, **dadurch gekennzeichnet, dass** die bearbeiteten Oberflächen während der Ultraschallbearbeitung mit Wasser gekühlt werden.

5. Verfahren zur Oberflächenbehandlung von hoch beanspruchten gleitenden Lagerflächen von Gussteilen aus Gusseisen mit Kugelgraphit nach Anspruch 5, **dadurch gekennzeichnet, dass** die Ultraschallbearbeitung mit Wasserkühlung eine Kavitation erzeugt.
